# EUROPÄISCHE PATENTSCHRIFT

(11) **EP 1 533 540 B1**
(45) Veröffentlichungstag und Bekanntmachung des Hinweises auf die Patenterteilung: **02.05.2007**
(21) Anmeldenummer: 04024338.8
(22) Anmeldetag: 13.10.2004
(51) Int. Cl.: F16F 9/46

(54) **Längenverstellbare Druckfeder**
Length-adjustable compression spring
Ressort de compression réglable en longueur

(30) Priorität: 18.11.2003 DE 10353903
(43) Veröffentlichungstag der Anmeldung: 25.05.2005
(73) Patentinhaber: SUSPA Holding GmbH, 90518 Altdorf (DE)
(72) Erfinder: Knaust, Holger, 92245 Kümmersbruck (DE)
(74) Vertreter: Hofmann, Matthias

(56) Entgegenhaltungen:
- EP-A- 0 052 832
- EP-A- 0 651 175
- DE-A1- 3 602 441
- DE-A1- 4 235 435

## Beschreibung

Die Erfindung betrifft eine längenverstellbare Druckfeder nach dem Oberbegriff des Anspruchs 1.

Derartige Druckfedern sind aus der DE 36 02 441 A1, der DE 42 35 435 A1 sowie durch offenkundige Vorbenutzung bekannt und kommen zum Beispiel bei Bürostühlen zum Einsatz. Hierbei werden sie sowohl für die Sitzhöhenverstellung als auch für die Verstellung einer Sitzflächen- und Rückenlehnenneigung beispielsweise bei einer bekannten Synchronmechanik eingesetzt. In diesem Zusammenhang soll die Möglichkeit geschaffen sein, die Druckfeder permanent in Auslösestellung zu halten, zum Beispiel um eine Wippfunktion der Synchronmechanik bereitzustellen. Um die Druckfeder dauerhaft in Auslösestellung zu halten, ist bisher eine Reihe von Lösungen vorgeschlagen worden. Hierzu gehören beispielsweise konstruktiv relativ aufwändige arretierbare Hebelverstellungen. Aus der EP 0 052 832 A2 ist eine arretierbare Knopfauslösung für eine Gasfeder bekannt, die in einem Steuerkopf untergebracht ist, der an das freie Ende der Kolbenstange der Gasfeder angeschraubt wird. Obwohl diese Steuerkopf-Lösung seit über 20 Jahren existiert, hat sie sich, offenbar aufgrund von konstruktiven Problemen, insbesondere was die Anpassung des Steuerkopfes an die jeweilige Gasfeder und was die Bauraumanforderungen der Steuerkopf-Lösung angeht, nicht durchgesetzt.

Es ist daher die Aufgabe der vorliegenden Erfindung, eine Arretierungsmöglichkeit für eine Druckfeder der eingangs genannten Art in der Auslösestellung zu schaffen, welche die Probleme der bekannten Lösungen überwindet.

Diese Aufgabe ist erfindungsgemäß gelöst durch eine Druckfeder mit den Merkmalen des Kennzeichnungsteils des Anspruchs 1.

Kern der Erfindung ist die Integration der Rasteinrichtung innerhalb des Gehäuses in die Kolbenstange der Druckfeder. Die Druckfeder stellt somit mitsamt der die Arretierung bewerkstelligenden Rasteinrichtung eine kompakte Baueinheit dar. Die Bauraumanforderungen dieser Einheit sind geringer als die einer Druckfeder mit aufgeschraubtem Steuerkopf. Zudem sind die Rastelemente der Rasteinrichtung im Gehäuse der Druckfeder gut geschützt, so dass sie klein dimensioniert werden können. Eine Fehlmontage aufgrund einer falschen Zuordnung eines Steuerkopfes zur Druckfeder und damit einer Fehlanpassung des Hubs der Rasteinrichtung zum Auslösehub der Druckfeder wird ebenfalls vermieden. Die erfindungsgemäße Rasteinrichtung kann einen so großen Rasthub bereitstellen, dass sie auch bei Druckfedern mit relativ großem Auslösehub eingesetzt werden kann.

Eine Rasteinrichtung nach Anspruch 2 lässt sich, da sich ähnliche Rasteinrichtungen bei Kugelschreibermechaniken bereits bewährt haben, robust und mit geringen Kosten herstellen.

Eine Rasteinrichtung nach Anspruch 3 ist robust ausführbar, da relativ große Rastflächen bereitgestellt werden können. Dadurch, dass eine Umstellung nicht erst bei einer 360°-Drehung, sondern schon bei einer 180°-Drehung (sogenannter Zwei-Takter) erreicht wird, lässt sich ein ausreichender Rasthub der Rasteinrichtung realisieren. Eine Rasteinrichtung, bei der eine Umstellung durch Drehung des anderen Rastelements um 360° erreicht wird, ist zwar noch robuster, weist aber in der Regel einen geringeren Rasthub auf. Rasteinrichtungen, bei denen die Umstellung durch eine Drehung des anderen Rastelements um Drehwinkel kleiner als 180° erreicht wird, zum Beispiel Drehungen um 120° (sogenannter Drei-Takter) oder um 90° (sogenannter Vier-Takter) bieten zwar die Möglichkeit eines großen Rasthubs, sind jedoch in ihrer Ausführung oft zu filigran. Prinzipiell können bei der Erfindung aber Rasteinrichtungen mit beliebiger Taktzahl eingesetzt werden.

Ein Rastelement nach Anspruch 4 führt zu einer besonders gut integrierten Rasteinrichtung.

Bei einer Rasteinrichtung nach Anspruch 5 hat ein bestimmter Transport-Wandabschnitt des längs geführten Rastelements mehrere Funktionen bei der Umstellung der Rasteinrichtung. Das längs geführte Rastelement kann daher im Vergleich zu Alternativlösungen, bei denen verschiedene Transport-Wandabschnitte die Transportfunktionen von der Auslösestellung in die Blockierstellung einerseits und von der Blockierstellung in die Auslösestellung andererseits übernehmen, im Bereich der Transport-Wandabschnitte robuster ausgeführt sein.

Eine Zwischenanschlagfläche nach Anspruch 6 verhindert ein Verklemmen der Rasteinrichtung.

Diese Funktion wird durch eine nach Anspruch 7 ausgeführte Zwischenanschlagfläche nochmals verbessert.

Ein Ausführungsbeispiel der Erfindung wird nachfolgend anhand der Zeichnung näher erläutert. In dieser zeigen:
- Fig. 1: eine Druckfeder im Längsschnitt
- Fig. 2 bis 6: Momentaufnahmen eines Ausschnitts aus der Druckfeder nach Fig. 1 mit verschiedenen Momentanpositionen einer Rasteinrichtung bei der Umstellung zwischen einer Blockierstellung der Druckfeder (Fig. 2, 6) und einer Auslösestellung (Fig. 4) und
- Fig. 7 bis 16: Zusätzliche perspektivische Momentaufnahmen der Rasteinrichtung bei der Umstellung zwischen einer Blockierstellung (Fig. 7 und 16) und einer Auslösestellung (Fig. 11), wobei Fig. 15 eine Ausschnittsvergrößerung aus Fig. 14 darstellt.

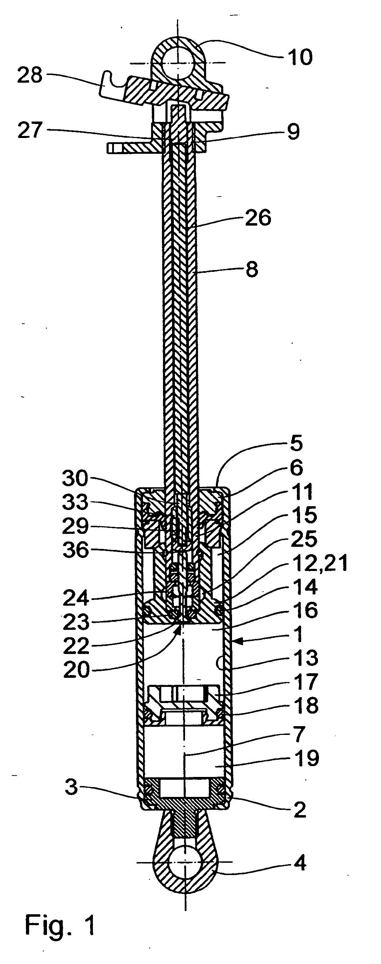

Die in Fig. 1 dargestellte längenverstellbare, blockierbare Druckgasfeder weist ein im Wesentlichen zylindrisches, aus einem Rohr hergestelltes Gehäuse 1 auf, das an einem Ende 2 mittels eines Bodens 3 gasdicht verschlossen ist, an dem ein Befestigungselement 4 angebracht ist. Am anderen Ende 5 des Gehäuses 1 ist eine ringförmig ausgebildete Führungs- und Dichtungs-Einheit 6 flüssigkeitsdicht befestigt, die zur Führung und Abdichtung einer im Gehäuse 1 konzentrisch zu dessen Mittel-Längsachse 7 verschiebbar angeordneten Kolbenstange 8 dient. Am außerhalb des Gehäuses 1 befindlichen freien Ende 9 der Kolbenstange 8 ist ebenfalls ein Befestigungselement 10 vorgesehen.

Am im Gehäuse 1 befindlichen Ende 11 der Kolbenstange 8 ist ein Kolben 12 angebracht, der an einer Innenwand 13 des Gehäuses 1 geführt ist und gegenüber diesem mittels einer Dichtung 14 flüssigkeitsdicht abgedichtet ist. Der Kolben 12 teilt den Innenraum des Gehäuses 1 in einen zwischen Kolben 12 und Führungs- und Dichtungs-Einheit 6 befindlichen ersten Teil-Gehäuseraum 15 und einen hiervon abgewandten zweiten Teil-Gehäuseraum 16. Letzterer wird durch einen Schiebekolben 17 begrenzt, der an der Innenwand 13 des Gehäuses 1 geführt verschiebbar und gegenüber dieser mittels einer Dichtung 18 gas- und flüssigkeitsdicht abgedichtet ist. Zwischen dem Schiebekolben 17 und dem Boden 3 ist eine als Kraftspeicher dienende Druckgaskammer 19 angeordnet, in der sich Gas unter Druck befindet. Die Teil-Gehäuseräume 15, 16 sind mit einer Flüssigkeit, beispielsweise Hydrauliköl, gefüllt.

Im Kolben 12 ist ein Blockier-Ventil 20 ausgebildet, mittels dessen die Teil-Gehäuseräume 15, 16 miteinander verbunden bzw. voneinander getrennt werden können. Das Ventil 20 weist einen Ventilkörper 21 auf, der sich auf der der Dichtungs- und Führungs-Einheit 6 zugewandten Seite des Kolbens 12 befindet.

In der in den Fig. 1, 2 und 6 gezeigten Blockierstellung des Ventils 20 dichtet ein Ventilstift 22 über eine Ringdichtung 23 gegen den Ventilkörper 21 ab. In der Blockierstellung ist eine Längsverschiebung der Kolbenstange 8 im Gehäuse 1 unterbunden. Der Ventilstift 22 ist koaxial zur Längsachse 7 im Ventilkörper 21 angeordnet. In Fig. 1 oberhalb der Ringdichtung 23 durchtritt der Ventilstift 22 einen mehrteiligen Überströmkörper 24. Der Innenraum von diesem steht über einen mehrere Stich- und Ringleitungsabschnitte aufweisenden Überströmkanal 25 mit dem ersten Teil-Gehäuseraum 15 in Strömungsverbindung.

Der Ventilstift 22 steht mit einer die Kolbenstange 8 durchsetzenden Ventilbetätigungsstange 26, deren freies, aus der Kolbenstange 8 herausragendes Ende als Betätigungsknopf 27 ausgebildet ist, der über einen Schwenkhebel 28 betätigt werden kann, über eine insgesamt mit 29 bezeichnete Rasteinrichtung in Schubverbindung. Die gesamte Rasteinrichtung 29 ist in der Kolbenstange 8 angeordnet.

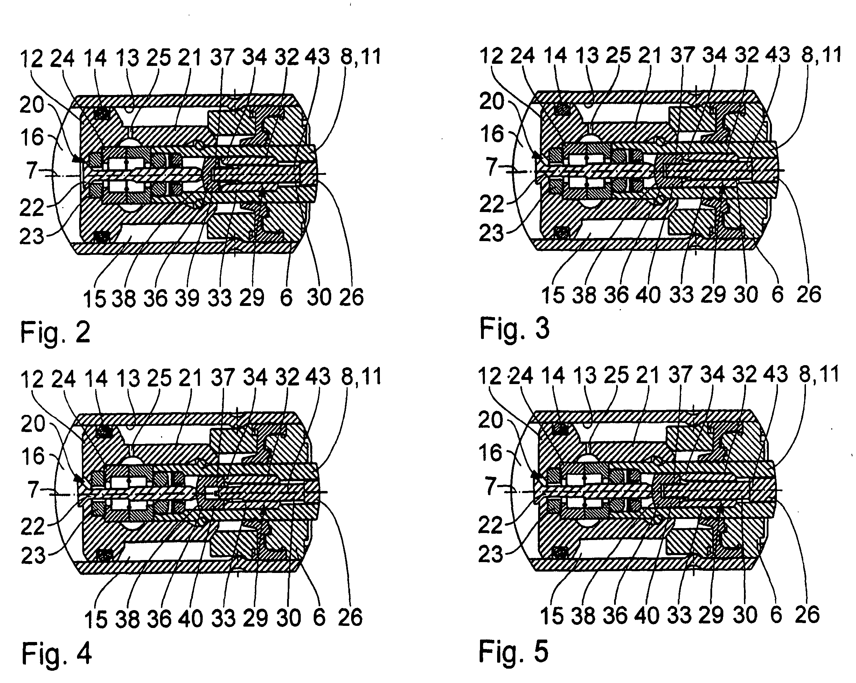

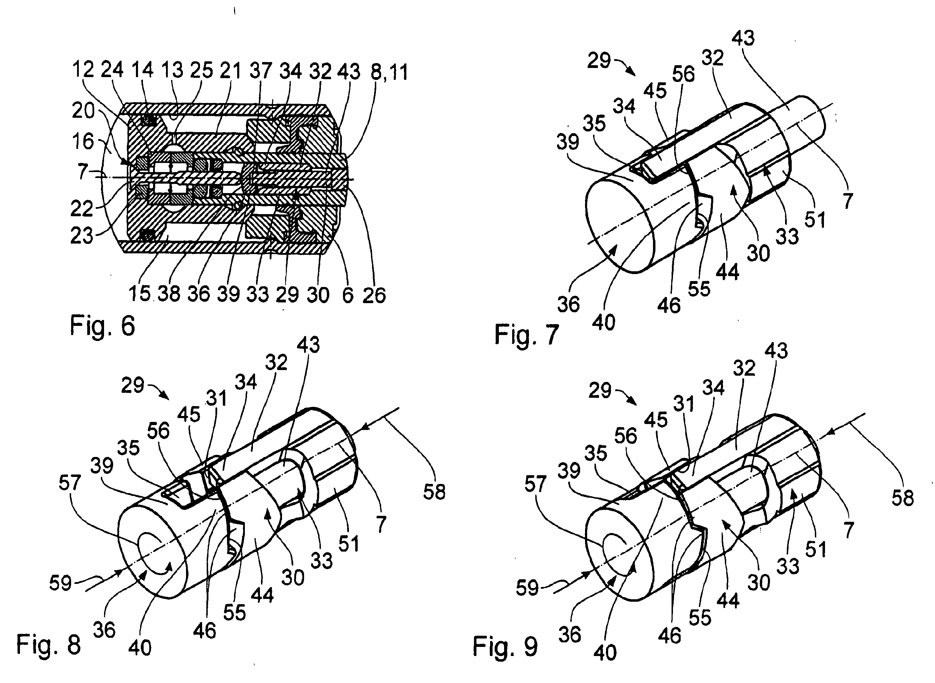

Die Rasteinrichtung 29 weist ein erstes Rastelement 30 auf, welches direkt an der Ventilbetätigungsstange 26 anliegt, so dass das erste Rastelement 30 mit dem Betätigungsknopf 27 in Schubverbindung steht. Das erste Rastelement 30 ist in der Schnittebene der Figuren 2 bis 6 als die Ventilbetätigungsstange 26 hin zum Ventilstift 22 verlängernder Stift ausgebildet. Die weitere dreidimensionale Formgebung des ersten Rastelements 30 ergibt sich aus der nachfolgenden Beschreibung der Figuren 7 bis 16. Das erste Rastelement 30 weist zwei Führungsnuten 31 (vgl. Fig. 8) auf, die mit hierzu komplementären, längs der Längsachse 7 verlaufenden Führungsnocken 32 eines in die Innenwand der hohlen Kolbenstange 8 gehäusefest eingepassten Rast-Führungselements 33 zusammenwirken. Das Rast-Führungselement 33 dient zur Führung einer Verlagerungsbewegung des ersten Rastelements 30 längs der Achse 7.

An der dem Kolben 12 zugewandten Stirnwand weisen die Führungsnocken 32 des Rast-Führungselements 33 jeweils eine Rastnase 34 mit abgeschrägter Stirnfläche auf. In der Blockierstellung nach den Fig. 1, 2 und 6 ist die Rastnase 34 des Rast-Führungselements 33 in eine Rastausnehmung 35 eines zweiten Rastelements 36 eingerastet. Das zweite Rastelement 36 weist eine Sackbohrung 37 auf, die sich hin zum ersten Rastelement 30 öffnet und in die der dem zweiten Rastelement 36 zugewandte Stift des ersten Rastelements 30 eindringen kann. Abgeschlossen ist die Sackbohrung 37 in Richtung auf den Ventilstift 22 zu durch einen Boden 38. Seitlich ist die Sackbohrung 37 begrenzt durch einen noch näher zu beschreibenden Hülsenkörper, der einstückig am Boden 38 angeformt ist und an dessen stirnseitiger, dem Boden 38 gegenüberliegender Wandung die Rastausnehmung 35 ausgebildet ist.

Der Hülsenkörper des zweiten Rastelements 36 ist in Umfangsrichtung um die Achse 7 unterteilt in vier Hülsenabschnitte, wobei sich einerseits die Rastausnehmungen 35 mit kurzen Hülsenabschnitten 39 und andererseits zwei längs der Achse 7 im Vergleich hierzu längere Hülsenabschnitte 40 gegenüberliegen. Das erste Rastelement 30, das Rast-Führungselement 33 und das zweite Rastelement 36 sind insgesamt bezogen auf die Achse 7 zweizählig drehsymmetrisch, d. h. die beiden Hälften dieser Elemente gehen durch Drehung um die Achse 7 um 180° ineinander über. In der Blockierstellung ist die Rastnase 34 so in die Rastausnehmung 35 eingerastet, dass im Schnitt der Fig. 1, 2 und 6 die kurzen Hülsenabschnitte 39 sichtbar sind.

Dem Boden 38 ist auf der dem ersten Rastelement abgewandten Seite direkt benachbart der Ventilstift 22, so dass letzterer bei einer Betätigung der Ventilbetätigungsstange 26 über den Betätigungsknopf 27 mit dem Boden 38 des zweiten Rastelements 36 in Schubverbindung steht.

Die Rasteinrichtung 29 ist perspektivisch in den Fig. 7 bis 16 dargestellt. Das erste Rastelement 30 liegt über die freie Stirnwand eines Führungsstifts 43 an der Ventilbetätigungsstange 26 an. Das von der Ventilbetätigungsstange 26 abgewandte Ende des Rastelements 30 ist als Steuerkopf mit zwei Steuerkopfhälften 44, 45 ausgebildet. Die äußeren Mantelflächen der Steuerkopfhälften 44 liegen bei montierter Rasteinrichtung 29 an der Innenwand der hohlen Kolbenstange 8 klemmend an und werden von dieser geführt. Auf der dem Führungsstift 43 abgewandten Stirnwand weisen die Steuerkopfhälften 44, 45 eine Rastverzahnung 46 auf. Zwischen den Steuerkopfhälften 44, 45 sind die beiden gegenüberliegenden Führungsnuten 31 ausgebildet, von denen in den Fig. 7 bis 16 nur die dem Betrachter zugewandte Führungsnut 31 sichtbar ist. Die Führungsnuten 31 wirken mit den hierzu komplementären Führungsnocken 32 des gehäusefesten Rast-Führungselements 33 in Form einer Rast-Führungshülse zusammen. Teil der Rast-Führungshülse 33 ist ein Hülsenkörper 51, der die Führungsnocken 32 in Richtung auf die Ventilbetätigungsstange 26 zu fortsetzt. Im Hülsenkörper 51 ist der Führungsstift 43 des ersten Rastelements 30 geführt.

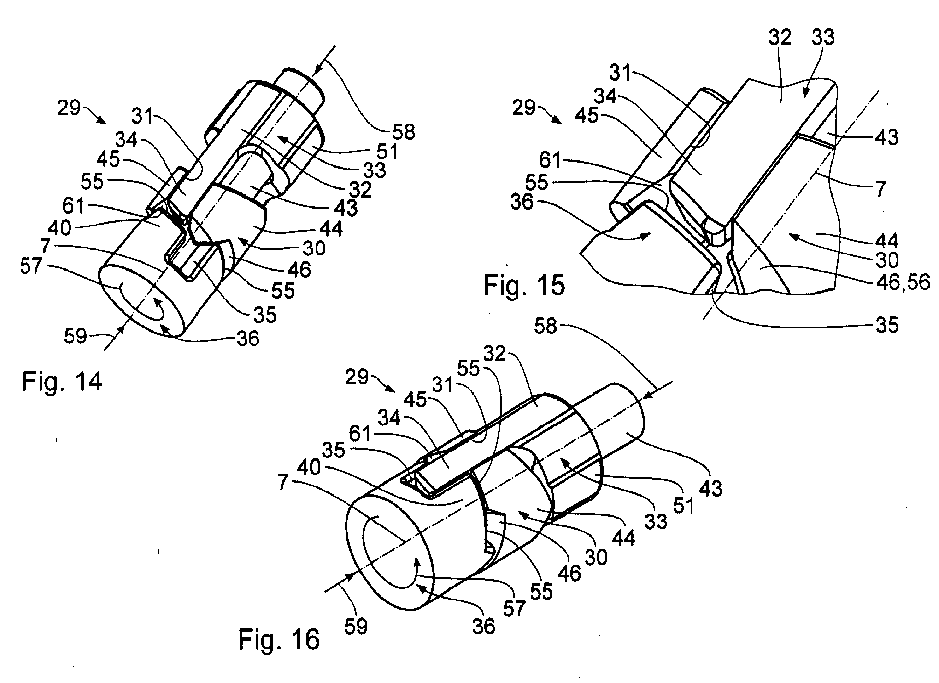

In der auch in den Fig. 7 und 16 gezeigten Blockierstellung der Rasteinrichtung 29 greifen die freien, dem Ventilstift 22 zugewandten Rastnasen 34 der Führungsnocken 32 in die hierzu komplementären Sack-Rastausnehmungen 35 des zweiten Rastelements 36 der Rasteinrichtung 29 ein. Die Außendurchmesser des zweiten Rastelements 36, der Steuerkopfhälften 44, 45 sowie des Hülsenkörpers 51 sind in etwa gleich, so dass alle drei Elemente in die Kolbenstange 8 eingepasst sind bzw. in dieser geführt sind. Die der Rastverzahnung 46 zugewandte Stirnwand des zweiten Rastelements 36 ist als hierzu teilweise komplementäre Rastverzahnung 55 ausgebildet. In der Blockierstellung der Rasteinrichtung 29 liegt die Rastverzahnung 46 des ersten Rastelements 30 an der Rastverzahnung 55 des zweiten Rastelements 36 über zwei gegenüberliegende schräge Transport-Wandabschnitte 56 an, von denen in den Fig. 7 bis 16 nur der dem Betrachter zugewandte Transport-Wandabschnitt 56 sichtbar ist. Die Schräge des Transport-Wandabschnitts 56 ist dabei derart, dass sich das zweite Rastelement 36 unter dem Einfluss des Schubes vom Ventilstift 22 und/oder von der Ventilbetätigungsstange 26 relativ zum ersten Rastelement 30 um die Achse 7 im Drehsinn eines Pfeils 57 in Fig. 8 drehen würde, wenn dies in der Blockierstellung nach Fig. 7 nicht durch die Führungsnocken 32 in den Rastausnehmungen 35 verhindert wäre.

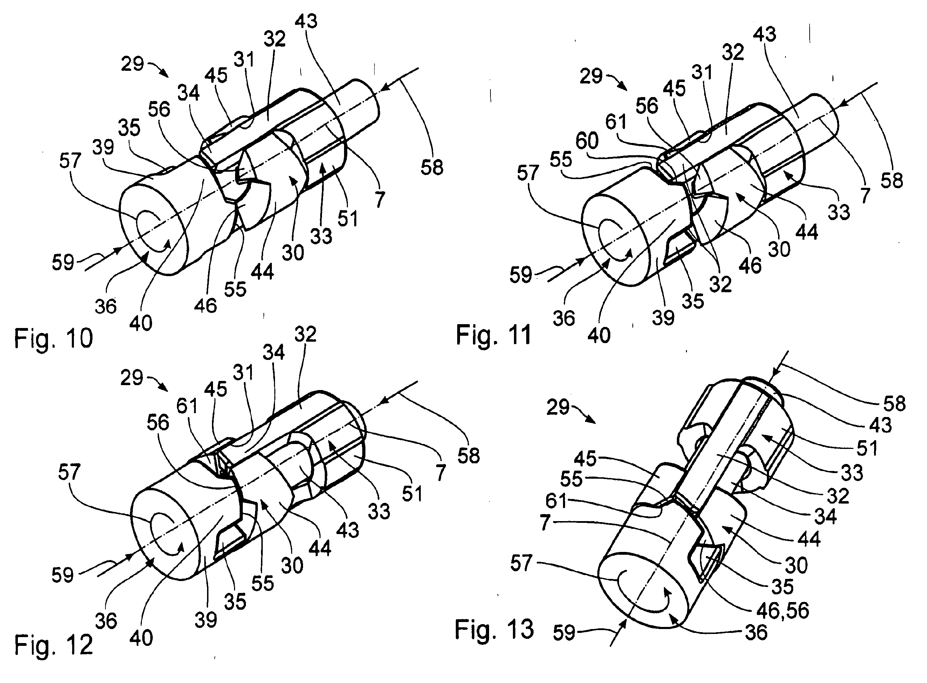

Die Rasteinrichtung 29 arbeitet nach Art einer Kugelschreiber-Rastung. Dies wird nachfolgend anhand der Momentaufnahmen der Fig. 7 bis 16 erläutert, welche die Umstellung der Rasteinrichtung 29 zwischen der Blockierstellung, die in den Fig. 7 und 16 gezeigt ist, und einer Auslösestellung, die in Fig. 11 gezeigt ist, darstellen. Ergänzend werden die Fig. 2 bis 6 herangezogen.

Durch eine über die Ventilbetätigungsstange 26 ausgeübte Betätigungsschubkraft 58 (vgl. Fig. 8) wird, ausgehend von der Blockierstellung das erste Rastelement 30 in Richtung der Betätigungsschubkraft 58 relativ zur Rast-Führungshülse 33 verlagert. Hierbei schiebt das erste Rastelement 30 auch das zweite Rastelement 36 in Richtung der Betätigungsschubkraft 58, bis die Rastausnehmungen 35 außer Eingriff mit den Führungsnocken 32 kommen. Diese Stellung ist in Fig. 8 dargestellt. Anschließend gleitet das zweite Rastelement 36 auf den schrägen Transport-Wandabschnitten 56 des ersten Rastelements 30 und dreht sich dabei um die Achse 7 in Richtung des Pfeils 57, bis zueinander komplementäre Schrägflächen der Rastverzahnungen 46, 55 miteinander in Eingriff kommen, wie in Fig. 9 dargestellt. In dieser Eingriffstellung der Rastverzahnungen 46, 55 überlappen Schrägflächenabschnitte der Rastverzahnung 55 des zweiten Rastelements 54 in Umfangsrichtung um die Achse 7 mit den diesen zugewandten schrägen Stirnwänden der Rastnasen 34 der Führungsnocken 32. Die Drehbewegung des zweiten Rastelements 36 um die Achse 7 in die Stellung nach den Fig. 3 und 9 wird hervorgerufen durch die Schubkraft 59, die vom nicht dargestellten Ventilstift 22 auf das zweite Rastelement 36 ausgeübt wird.

Wenn nun die Betätigung der Ventilbetätigungsstange 26 endet und somit die Betätigungsschubkraft 58 nicht mehr vorliegt, gleitet das erste Rastelement 30, gegebenenfalls unter Einfluss einer nicht dargestellten Rückholfeder, zurück in eine Position, die derjenigen nach Fig. 7 entspricht und in der die Steuerkopfhälften 44, 45 am Hülsenkörper 51 anliegen. Die Rastverzahnungen 46, 55 kommen dabei frei, so dass sich das zweite Rastelement 36 unter dem Einfluss der druckerzeugten Schubkraft 59 des Ventilstifts 22 weiter in Richtung des Pfeils 57 drehen kann, wobei gegenüberliegende schräge Flanken der Rastverzahnung 55 auf den schräg ausgeführten gegenüberliegenden stirnseitigen Enden der Führungsnasen 34 der Führungsnocken 32 gleiten. Der Beginn dieser Drehbewegung ist in Fig. 10 gezeigt, das Ende dieser Drehbewegung in Fig. 11. Falls die Rastverzahnungen 46, 55 bei dieser Drehbewegung noch aneinander anliegen, drücken die bei der Drehbewegung aufeinander abgleitenden komplementären Schrägflächen der Rastverzahnungen 46, 55 das erste Rastelement 30 in die zum Beispiel in der Figur 10 dargestellte Ausgangsposition. In der Momentanstellung nach den Fig. 4 und 11 sind die stirnseitigen Enden der Führungsnasen 34 in entsprechende Rastvorsprünge 60 der Rastverzahnung 55 eingerastet. Die dem Ventilstift 22 zugewandte Bodenwand ist im Vergleich zur Blockierstellung nach Fig. 7 um den Auslösehub des Ventilstifts 22 verlagert. In Fig. 11 liegt daher die Rasteinrichtung 29 in Auslösestellung vor. Das Ventil 20 ist in dieser Stellung verrastet geöffnet, wobei die Schubkraft 59, die der Ventilstift 22 auf das zweite Rastelement 36 ausübt, für eine sichere Verrastung sorgt.

Wird ausgehend von der Momentanposition nach Fig. 11 die Ventilbetätigungsstange 26 durch die Betätigungsschubkraft 58 erneut betätigt, so schiebt das erste Rastelement 30 das zweite Rastelement 36 solange in Richtung auf den Ventilstift 22 zu, bis die Rastvorsprünge 60 außer Eingriff mit den Führungsnasen 34 kommen. Diese Momentanposition ist in Fig. 12 dargestellt. Im Anschluss hieran gleiten unter dem Einfluss der Schubkräfte 58, 59 Schrägflächen der Rastverzahnung 55 über die Transport-Wandabschnitte 56, so dass das zweite Rastelement 36 weiter um die Achse 7 in Richtung des Pfeils 57 relativ zum ersten Rastelement 30 verdreht wird. Dies geschieht solange, bis die Rastvorsprünge 60 an hierzu komplementär ausgeführten Zwischenanschlagflächen 61 der Rastverzahnung 46 anschlagen. Diese Situation ist in Fig. 13 dargestellt und entspricht der Momentanposition nach Fig. 5. Wenn nun die Betätigung der Ventilbetätigungsstange 26 beendet wird, gleitet das erste Rastelement 30 wieder zurück in Richtung auf den Hülsenkörper 51 zu, wie in Fig. 14 dargestellt. Diese Rückführbewegung des ersten Rastelements 30 wird unterstützt durch das Abgleiten der schrägen Rastvorsprünge 60 auf den hierzu komplementären schrägen Zwischenanschlagflächen 61, wie insbesondere im in Fig. 15 gezeigten Teilausschnitt der Fig. 14 dargestellt. Diese Zwangsführung der Rückführbewegung des ersten Rastelements 30 verhindert, dass der Transport-Wandabschnitt 56 die weitere Drehbewegung des zweiten Rastelements 36 stört. Die Rastausnehmung 35 kann daher am Transport-Wandabschnitt 56 vorbeidrehen. Im Anschluss hieran gleiten Schrägflächen der Rastverzahnung 55 wieder an den schrägen Stirnwänden der Führungsnasen 34 ab, bis die Rastausnehmungen 35 sich soweit gedreht haben, dass die Führungsnasen 34 wieder in diese einrasten. Es ist dann wieder die Blockierstellung der Rasteinrichtung 29 erreicht (vgl. Fig. 6 und 16).

Die Transport-Wandabschnitte 56 wirken also sowohl bei der Verlagerung von der Blockierstellung in die Auslösestellung als auch bei der Verlagerung von der Auslösestellung in die Blockierstellung gleitend mit der Rastverzahnung 55 des zweiten Rastelements 36 zusammen.

## Patentansprüche

1. Längenverstellbare Druckfeder
- mit einem mit Druck-Medium gefüllten Gehäuse (1),
- mit einer das Gehäuse (1) an einem ersten Ende (5) abschließenden Führungs- und Dichtungs-Einheit (6),
- mit einer abgedichtet durch die Führungs- und Dichtungs-Einheit (6) aus dem ersten Ende herausgeführten Kolbenstange (8), die ein äußeres Ende aufweist,
- mit einem mit der Kolbenstange (8) verbundenen, im Gehäuse (1) abgedichtet geführten Kolben (12),
- mit einem einseitig vom Kolben (12) begrenzten und mit Druck-Medium gefüllten ersten Teil-Gehäuseraum (15),
- mit einem weiteren, mit dem ersten Teil-Gehäuseraum (15) verbindbaren und mit Druck-Medium gefüllten zweiten Teil-Gehäuseraum (16),
- mit einem betätigbaren Ventil (20) zum Miteinander-Verbinden der Teil-Gehäuseräume (15, 16), welches einen von außerhalb des Gehäuses (1) über ein Bedienelement (27, 28) betätigbaren Ventilstift (22) aufweist, wobei der Ventilstift (22) zwischen einer Auslösestellung und einer Blockierstellung derart verlagerbar ist, dass
- in der Auslösestellung des Ventilstifts (22) die Verbindung zwischen den Teil-Gehäuseräumen (15, 16) freigegeben und
- in der Blockierstellung des Ventilstifts (22) die Verbindung zwischen den Teil-Gehäuseräumen (15, 16) verschlossen ist,
**gekennzeichnet durch**
eine im Gehäuse (1) in der Kolbenstange (8) angeordnete Rasteinrichtung (29), die aufweist:
-- ein erstes, mit dem Bedienelement (27, 28) in Schubverbindung stehendes Rastelement (30),
-- ein zweites, mit dem Ventilstift (22) in Schubverbindung stehendes Rastelement (36),
-- welche nach Art einer Kugelschreiber-Rastung derart zusammenwirken, dass der Ventilstift (22)
-- in einer ersten Raststellung der Rastelemente (30, 36) in Auslösestellung und
-- in einer zweiten Raststellung der Rastelemente (30, 36) in Blockierstellung vorliegt.

2. Druckfeder nach Anspruch 1, **gekennzeichnet durch** ein gehäusefestes Rast-Führungselement (33) zur Führung eines der Rastelemente (30) längs der Verlagerungsrichtung des Ventilstifts (22), wobei die Rastelemente (30, 36) mit dem Rast-Führungselement (33) derart zusammenwirken,
- dass eine Umstellung zwischen den beiden Raststellungen **durch** eine stets mit dem gleichen Drehsinn (57) erfolgende Drehung des anderen, also **durch** das Rast-Führungselement (33) nicht längs geführten Rastelements (30) relativ zum längs geführten Rastelement (30) erreicht wird, und
- dass die Raststellungen **durch** rastendes Zusammenwirken des anderen Rastelements (36) mit dem Rast-Führungselement (33) erreicht werden.

3. Druckfeder nach Anspruch 1 oder 2, **dadurch gekennzeichnet, dass** eine Umstellung durch eine Drehung des anderen Rastelements (36) um 180° erreicht wird.

4. Druckfeder nach einem der Ansprüche 1 bis 3, **dadurch gekennzeichnet, dass** eines der Rastelemente (30) einstückig mit einer Ventilbetätigungsstange (26) verbunden ist, über welche das Bedienelement (27, 28) mit dem Ventilstift (22) über die Rasteinrichtung (29) zusammenwirkt.

5. Druckfeder nach einem der Ansprüche 2 bis 4, **dadurch gekennzeichnet, dass** das längs geführte Rastelement (30) schräge Transport-Wandabschnitte (46, 56) aufweist, über die das andere Rastelement (36) bei der Verlagerung von der Auslösestellung in die Blockierstellung und von der Blockierstellung in die Auslösestellung gleitet, wobei derselbe Transport-Wandabschnitt (56) des längs geführten Rastelements (30) sowohl für die Verlagerung von der Auslösestellung in die Blockierstellung als auch für die Verlagerung von der Blockierstellung in die Auslösestellung zum Einsatz kommt.

6. Druckfeder nach einem der Ansprüche 2 bis 5, **dadurch gekennzeichnet, dass** das längs geführte Rastelement (30) eine Zwischenanschlagfläche (61) zur Begrenzung einer Drehbewegung des anderen Rastelements (36) derart aufweist, dass, bevor das andere Rastelement (36) mit dem Rast-Führungselement (33) rastend zusammenwirkt, dass längs geführte Rastelement (30) von einer Rast-Ausnehmung (35) des anderen Rastelements (36) frei kommt, über die dieses mit dem Rast-Führungselement (33) rastend zusammenwirkt.

7. Druckfeder nach Anspruch 6, **dadurch gekennzeichnet, dass** die Zwischenanschlagfläche (61) derart schräg ausgeführt ist, dass die Drehbewegung des anderen Rastelements (36) eine Verlagerungsbewegung des längs geführten Rastelements (30) zum Freikommen von diesem von der Rast-Ausnehmung (35) des anderen Rastelements (36) unterstützt.

## Claims

1. An adjustable-length compression spring, comprising
- a casing (1) filled with pressure fluid;
- a guide and seal unit (6) which closes the casing (1) at a first end (5);
- a piston rod (8) which, through the guide and seal unit (6), is extended from, and sealed towards, the first end (5) and has an outer end (9);
- a piston (12) which is joined to the piston rod (8) and sealingly guided in the casing (1);
- a first sectional casing chamber (15) which is unilaterally defined by the piston (12) and filled with pressure fluid;
- a second sectional casing chamber (16) which is connectable to the first sectional casing chamber (15) and filled with pressure fluid;
- an operating valve (20) for connection to each other of the sectional casing chambers (15, 16), the valve (20) comprising a valve pin (22) to be actuated from outside the casing (1) by an operating element (27, 28), the valve pin (22) being displaceable between a position of release and a position of blocking such that
- in the position of release of the valve pin (22), the connection between the sectional casing chambers (15, 16) is released; and
- in the position of blocking of the valve pin (22), the connection between the sectional casing chambers (15, 16) is shut off;
**characterized by**
a locking mechanism (29) which is disposed in the casing (1) inside the piston rod (8), comprising
-- a first locking element (30) which is in pushing connection with the operating element (27, 28);
-- a second locking element (36) which is in pushing connection with the valve pin (22);
-- both of which cooperate in the way of a retractable ballpoint pen mechanism such that the valve pin (22)
-- in a first position of locking of the locking elements (30, 36), is in a position of release; and
-- in a second position of locking of the locking elements (30, 36), is in a position of blocking.

2. A compression spring according to claim 1, **characterized by** a snap-in guide element (33), stationary in the casing (1), for guidance of a first of the locking elements (30) in the direction of displacement of the valve pin (22), the locking elements (30, 36) cooperating with the snap-in guide element (33)
- such that change-over between the two locking positions is obtained by rotation, regularly in the same sense of rotation (57), of the second locking element (36), which is not longitudinally guided by the snap-in guide element (33), in relation to the first locking element (30), which is longitudinally guided; and
- such that the locking positions are obtained by locking cooperation of the second locking element (36) with the snap-in guide element (33).

3. A compression spring according to claim 1 or 2, **characterized in that** change-over is obtained by rotation of the second locking element (36) by 180°.

4. A compression spring according to one of claims 1 to 3, **characterized in that** one of the locking elements (30) is integrally joined to a valve-operating rod (26), by way of which the operating element (27, 28) cooperates with the valve pin (22) via the locking mechanism (29).

5. A compression spring according to one of claims 2 to 4, **characterized in that** the longitudinally guided locking element (30) has inclined delivery wall sections (46, 56), along which the second locking element (36) slides upon displacement from the position of release into the position of blocking and from the position of blocking into the position of release, one and the same delivery wall section (56) of the longitudinally guided locking element (30) being used for displacement from the position of release into the position of blocking as well as for displacement from the position of blocking into the position of release.

6. A compression spring according to one of claims 2 to 5, **characterized in that** the longitudinally guided locking element (30) comprises an intermediate stop (61) for defined motion of rotation of the second locking element (36) such that, prior to the second locking element (36) cooperating with the snap-in guide element (33) for locking engagement, the longitudinally guided locking element (30) disengages from catching recess (35) of the second locking element (36), by way of which the second locking element (36) cooperates with the snap-in guide element (33) for locking engagement.

7. A compression spring according to claim 6, **characterized in that** the intermediate stop (61) is inclined such that the motion of rotation of the second locking element (36) supports a motion of displacement of the longitudinally guided locking element (30) for disengagement thereof from the catching recess (35) of the second locking element (36).

## Revendications

1. Ressort à pression réglable en longueur
- avec un compartiment (1) rempli de liquide de pression,
- avec une unité de guidage et d'herméticité (6) fermant le compartiment à une première extrémité (5),
- avec une tige à piston (8) ressortant par l'unité de guidage et d'herméticité (6) de manière hermétique de la première extrémité, et présentant une extrémité externe,
- avec un piston (12) dirigé hermétiquement dans le compartiment (1) et relié à la tige à piston (8)
- avec une première chambre partielle de compartiment (15) délimité d'un seul côté par le piston (12) et remplie de liquide de pression,
- avec une deuxième chambre partielle de compartiment (16) remplie de liquide de pression et qui peut être reliée à la première chambre partielle de compartiment (15),
- avec une vanne (20) actionnable servant à relier les chambres partielles de compartiment (15, 16), qui présente une valve (22) actionnable depuis l'extérieur du compartiment (1) grâce à un élément d'activation (27, 28), où la valve (22) peut être placée entre une position de déclenchement et une position de blocage de telle sorte que
- en position de déclenchement de la valve (22), le passage entre les chambres partielles de compartiment (15, 16) est ouvert et
- en position de blocage de la valve (22) le passage entre les chambres partielles de compartiment (15, 16) est refermé,
**caractérisé en ce que**
un dispositif d'arrêt (29) est placé dans la tige à piston (8) à l'intérieur du compartiment (1), et qui présente :
-- un premier élément de cran d'arrêt (30) articulé avec l'élément d'activation (27, 28)
-- un deuxième élément de cran d'arrêt (36) articulé avec la valve (22)
-- lesquels, à la manière d'un cran d'arrêt de stylo bille, agissent de telle sorte que la valve (22)
-- est en position de déclenchement lors d'une première position d'arrêt des éléments de cran d'arrêt (30, 36)
-- est en position de blocage lors d'une seconde position d'arrêt des éléments de cran d'arrêt (30, 36).

2. Ressort à pression selon la revendication 1, **caractérisé par** un élément de guidage d'arrêt (33) à corps fixe pour le guidage de l'un des éléments de cran d'arrêt (30) le long de la direction de déplacement de la valve (22), où les éléments de cran d'arrêt (30, 36) agissent avec l'élément de guidage d'arrêt (33) de telle sorte que
- un changement entre les deux positions d'arrêt est obtenu grâce à une rotation de l'autre avec toujours le même sens de rotation (57), donc grâce à l'élément de guidage d'arrêt (33) pas l'élément de cran d'arrêt (30) à mouvement longitudinal relativement à l'élément de cran d'arrêt (30) à mouvement longitudinal, et
- les positions d'arrêt sont obtenues grâce à une action de l'autre élément de cran d'arrêt (36) avec l'élément de guidage d'arrêt (33).

3. Ressort à pression selon la revendication 1 ou 2, **caractérisé en ce que** l'on obtient un changement de positionnement grâce à une rotation de 180° de l'autre élément de cran d'arrêt (36)

4. Ressort à pression selon l'une des revendications 1 à 3, **caractérisé en ce que** l'un des éléments de cran d'arrêt (30) est relié en un bloc avec une tige d'actionnement de vanne (26) à partir de laquelle l'élément d'activation (27, 28) agit avec la valve (22) par le biais du dispositif d'arrêt (29).

5. Ressort à pression selon l'une des revendications 2 à 4, **caractérisé en ce que** l'élément de cran d'arrêt (30) à mouvement longitudinal présente des flans de transport (46, 56) obliques, sur lesquels l'autre élément de cran d'arrêt (36) glisse lors du déplacement de la position de déclenchement à la position de blocage et de la position de blocage à la position de déclenchement, où le même flan de transport (56) de l'élément de cran d'arrêt (30) à mouvement longitudinal entre en action aussi bien pour le déplacement de la position de déclenchement à la position de blocage que pour le déplacement de la position de blocage à la position de déclenchement.

6. Ressort à pression selon l'une des revendications 2 à 5, **caractérisé en ce que** l'élément de cran d'arrêt (30) à mouvement longitudinal présente une surface de butée auxiliaire (61) pour la délimitation d'un mouvement de rotation de l'autre élément de cran d'arrêt (36) de sorte qu'avant que l'autre élément de cran d'arrêt (36) agisse avec l'élément de guidage d'arrêt (33) pour créer un arrêt, l'élément de cran d'arrêt (30) à mouvement longitudinal se libère d'une entaille d'arrêt (35) de l'autre élément de cran d'arrêt (36), par laquelle celui-ci agit en arrêt avec l'élément de guidage d'arrêt (33).

7. Ressort à pression selon la revendication 6, **caractérisé en ce que** la surface de butée auxiliaire (61) est conçue en oblique de sorte que le mouvement de rotation de l'autre élément de cran d'arrêt (36) favorise un mouvement de déplacement de l'élément de cran d'arrêt (30) à mouvement longitudinal pour libérer ce dernier de l'entaille d'arrêt (35) de l'autre élément de cran d'arrêt (36).
